# EUROPEAN PATENT APPLICATION

(11) **EP 0 606 081 A1**
(43) Date of publication of application: **13.07.1994**
(21) Application number: 94100119.0
(22) Date of filing: 05.01.1994
(51) Int. Cl.: B01D 53/36, F25J 3/04

(54) **Purification system using heat of compression**

(30) Priority: 06.01.1993 US 893
(71) Applicant: PRAXAIR TECHNOLOGY, INC., Danbury, CT 06810-5113 (US)
(72) Inventor: Royal, John Henry, Grand Island, New York 14072 (US); Markowski, Mary Louise, Lewiston, New York 14092 (US)
(74) Representative: Schwan, Gerhard, Dipl.-Ing.

(57) **Abstract**

A system wherein a stream comprising oxygen and oxidizable species comprising at least one of carbon monoxide, hydrogen and methane is compressed to generate heat of compression and is passed without intermediate cooling through a catalytic zone for reaction to produce oxidized species which are subsequently removed from the feed stream.

## Description

### Technical Field

This invention relates to the removal of oxidizable impurities such as carbon monoxide, hydrogen and/or methane from an oxygen containing stream. It will find particular utility in the cleaning of a feed stream to a cryogenic air separation plant.

### Background Art

In the cryogenic rectification of air to produce industrial gases such as nitrogen and oxygen, the feed air is cleaned of high boiling impurities, such as carbon dioxide, water vapor and most hydrocarbons, prior to the passage of the feed air into a cryogenic rectification column of the air separation plant. If such high boiling impurities were not removed from the feed stream, they would condense and solidify at the low temperatures at which the cryogenic rectification system is carried out, consequently severely burdening the separation process. Generally, these high boiling impurities are removed from the feed air stream upstream of the cryogenic rectification column or columns by passage of the feed air stream through reversing heat exchangers or adsorbent beds comprising molecular sieve or other adsorbent.

The feed air stream to the cryogenic rectification plant may also contain low boiling impurities such as carbon monoxide and hydrogen and trace hydrocarbons, such as methane. These low boiling impurities will remain in the gaseous state throughout the cryogenic rectification and thus will not burden the separation as would the aforementioned high boiling impurities. For this reason these low boiling impurities generally are not removed from the feed air to a cryogenic rectification plant, but, rather, are allowed to go through the system and come out of the cryogenic rectification with the products, primarily the more volatile product, which generally is the nitrogen.

Nitrogen containing small amounts of low boiling impurities of carbon monoxide and hydrogen is suitable for most uses. However, some uses of nitrogen, such as in the inerting of semiconductor manufacturing processes used in the electronics industry, require ultra high purity nitrogen which has been substantially cleaned of carbon monoxide and hydrogen. In these situations, there is commonly employed a point of use purifier which removes the carbon monoxide and hydrogen from the nitrogen stream just prior to the use point. Point of use purifiers may also be used to remove methane from the oxygen product of a cryogenic air separation plant. Such point of use purifiers have been very effective in removing, for example, carbon monoxide and hydrogen from nitrogen, but they have certain drawbacks such as expense and difficulty of use. Moreover, another detriment of point of use purifiers is that they invariably generate particulate matter and pass this particulate matter into the nitrogen stream in the course of the passage of the stream through the purifier. This is especially detrimental when the nitrogen is to be used in an application requiring that the nitrogen be of ultra high purity.

Accordingly, it is desirable to avoid requiring the use of a point of use purifier to process a product taken from a cryogenic rectification plant. One way this may be done is to remove carbon monoxide and hydrogen from the feed air stream prior to its introduction into the cryogenic rectification column(s). In this way, the product from the cryogenic rectification plant, such as nitrogen, is substantially free of these low boiling impurities and thus may be used directly in an ultra high purity application without requiring point of use purification. While systems for removing impurities such as carbon monoxide and hydrogen from a feed air stream are known, they are generally expensive requiring high temperatures for efficient operation.

Accordingly, it is an object of this invention to provide an improved system for removing oxidizable impurities such as carbon monoxide, hydrogen and/or methane from a feed stream.

It is another object of this invention to provide an improved system for removing oxidizable impurities such as carbon monoxide, hydrogen and/or methane from a feed stream which is particularly useful in conjunction with a cryogenic rectification plant.

### Summary Of The Invention

The above and other objects which will become apparent to one skilled in the art upon a reading of this disclosure are attained by the present invention one aspect of which is:
A method for removing oxidizable species from a feed stream comprising:
(A) compressing a feed stream comprising oxygen and at least one oxidizable species from the group consisting of carbon monoxide, hydrogen and methane while elevating the temperature of the feed stream by heat of compression generated during the compression;
(B) passing the feed stream containing heat of compression through a catalytic zone containing oxidation catalyst;
(C) oxidizing oxidizable species in the feed stream to produce oxidized species within the catalytic zone; and
(D) removing oxidized species from the feed stream.

Another aspect of the invention is:
Apparatus for removing oxidizable species from a feed stream comprising:
(A) a compressor and a catalyst bed;
(B) means for passing a feed stream to the compressor and means for passing the feed stream from the compressor to the catalyst bed without traversing a cooling means;
(C) a purifier for removing oxidized species from a stream;
(D) means for passing the feed stream through the purifier and means for withdrawing the feed stream from the purifier.

As used herein, the term "bed" means a permeable aggregate of pelletized solid particles held within a vessel.

As used herein, the term "column" means a distillation or fractionation column or zone, i.e., a contacting column or zone wherein liquid and vapor phases are countercurrently contacted to effect separation of a fluid mixture, as for example, by contacting of the vapor and liquid phases on vapor-liquid contacting elements such as on a series of vertically space trays or plates mounted within the column and/or on packing elements which may be structured and/or random packing elements. For a further discussion of distillation columns, see the Chemical Engineers' Handbook. Fifth Edition, edited by R. H. Perry and C. H. Chilton, McGraw-Hill Book Company, New York, Section 13, "Distillation", B. D. Smith, et al., page 13-3, The Continuous Distillation Process.

As used herein, the term "rectification" or continuous distillation means a separation process that combines successive partial vaporizations and condensations as obtained by a countercurrent treatment of the vapor and liquid phases. Cryogenic rectification is a rectification process carried out, at least in part, at low temperatures, such as at temperatures at or below 150°K. A cryogenic rectification plant comprises one or more columns.

As used herein, the term "indirect heat exchange" means the bringing of two fluid streams into heat exchange relation without any physical contact or intermixing of the fluids with each other.

As used herein, the term "feed air" means a mixture comprising primarily nitrogen and oxygen such as air.

As used herein, the term "compressor" means a device for increasing the pressure of a gas.

As used herein, the term "heat of compression" means the energy input to gas such as feed air by a compressor manifested by an increase in the temperature of the gas.

### Brief Description Of The Drawings

Figure 1 is a simplified schematic representation of the purification system of this invention.

Figure 2 is a representation of one embodiment of a cryogenic rectification plant which may be useful in conjunction with the purification system of this invention.

### Detailed Description

The invention removes carbon monoxide, hydrogen and/or methane from a stream which also comprises oxygen by first compressing the stream to an elevated pressure to generate heat of compression and maintaining the heat of compression in the stream as it passes through a catalytic zone containing oxidation catalyst. The heat of compression enables the catalytic reactions to proceed with greater efficiency thus facilitating the conversion of the oxidizable species to oxidized species. In the practice of this invention carbon monoxide, if present, is converted to carbon dioxide; hydrogen, if present, is converted to water; and methane, if present, is converted to carbon dioxide and water. The carbon dioxide and/or water are removed from the stream by conventional methods such as by use of reversing heat exchangers, molecular sieve adsorbent beds or gel traps.

In the cryogenic rectification of air, the feed air is typically compressed to an elevated pressure to drive the separation. The feed air is then typically cooled to remove the resulting heat of compression. The invention is particularly useful in the processing of the feed stream for such cryogenic rectification because it now advantageously uses the heat of compression which is generated anyway and heretofore has been removed without use.

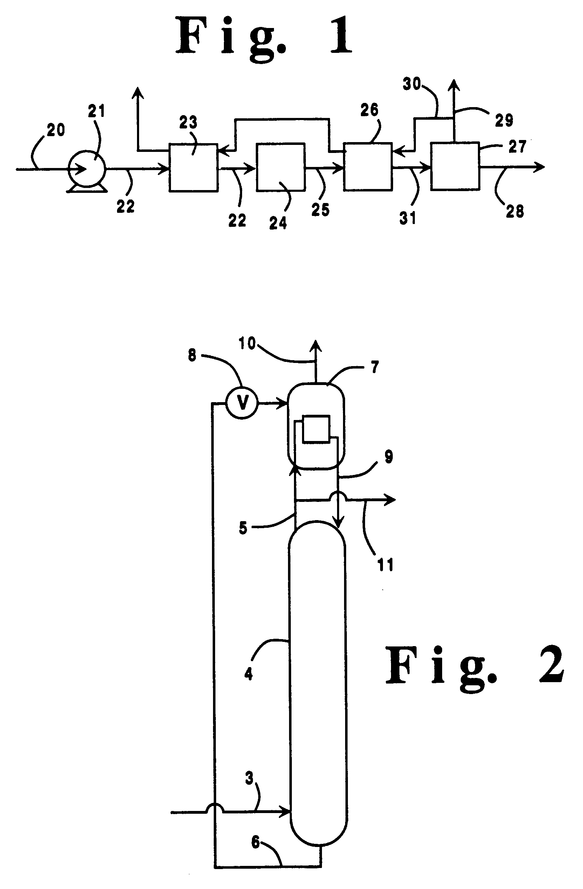

The invention will be described in detail with reference to the Drawings. Referring now to Figure 1 feed stream 20 comprising carbon monoxide, hydrogen and/or methane along with oxygen is passed to compressor 21. The feed stream may be intended as feed to a further processing operation or it may be intended for recovery directly after the removal of the oxidizable species. A particularly preferred feed stream is ambient air which is intended as the feed for a cryogenic rectification plant. Typically, such ambient air contains carbon monoxide in an average concentration within the range of from 1 to 5000 parts per billion (ppb) and contains hydrogen in an average concentration within the range of from 0.5 to 20000 ppb.

As the feed stream is passed through compressor 21, the pressure of the feed stream is elevated, generally to within the range of from 40 to 400 pounds per square inch absolute (psia), and in the process generating heat of compression which elevates the temperature of the feed. Preferably, the temperature of feed stream 22 withdrawn from compressor 21 is at a temperature of at least 90°C and generally within the range of from 80 to 200°C.

Especially in the case where the feed is ambient air which also contains water vapor, it may be desirable to remove water vapor from the feed prior to the catalytic zone. In such a case, the feed may be passed through moisture guard 23 for the removal of water. Moisture guard 23 may comprise a membrane and/or pellet dessicant.

Stream 22 is then passed into and through catalytic zone 24. Stream 22 is passed into catalytic zone 24 while still containing heat of compression and at a temperature of at least 80°C such that there is no intervening traversal of a heat exchange or cooling means by the feed between compressor 21 and catalytic zone 24. It is recognized that there may be some heat loss in stream 22 between the compressor and the catalytic zone. In the practice of this invention there is no means between the compressor and the catalytic zone whose sole or primary function is to remove heat from stream 22.

Catalytic zone or catalyst bed 24 comprises at least one metallic element chosen from among ruthenium, copper, osmium, rhodium, palladium, iridium, platinum and tin. The catalyst bed may comprise a mixture comprising two or more of these metallic elements. The metal or metals contained in the catalyst generally are supported either in the form of a coating on a surface such as alumina, ion-exchanged molecular sieves, gels and/or a honeycomb configuration.

As the feed passes through catalyst bed 24, the oxidizable specie or species in stream 22 are trapped and oxidized with oxygen in the feed to form carbon dioxide and/or water as the case may be.

The feed stream 25 is withdrawn from catalytic zone 24 and is passed into and through purifier 26 wherein carbon dioxide and/or water vapor are removed. The purifier may be, for example, a reversing heat exchanger, an adsorbent bed or a gel trap. In the case where the feed is to a cryogenic rectification column, the purifier would normally already be in place to remove the naturally occurring high boiling impurities. Thus, the invention conveniently serves to convert difficult to remove low boiling impurities into easier to remove high boiling impurities. As discussed previously, moisture guard 23 need not be employed and all of the water, including that generated by the catalytic oxidation, may be removed by means of purifier 26. Generally, feed stream 25 is cooled prior to passage through purifier 26.

After passage through purifier 26, the feed 31 is passed to a use point. In the case of cryogenic rectification, the use point is a cryogenic rectification plant comprising one or more columns which produces product such as nitrogen, oxygen and/or argon. Such a cryogenic rectification plant is represented in Figure 1 by item 27. Within the cryogenic rectification plant, the feed is separated by cryogenic rectification into product such as nitrogen 28 and waste 29. As illustrated in Figure 1, a portion 30 of the waste may be used to regenerate purifier 26 and/or moisture guard 23.

The invention will find its greatest utility when the carbon monoxide and hydrogen concentrations in the feed equal or exceed 1 part per million (ppm) and can remove these impurities to concentrations as low as 0.1 ppm or lower. In the event the feed contains other oxidizable species in addition to carbon monoxide, hydrogen and/or methane, depending upon which oxidizable species are present, such species may also be removed in the course of carrying out the invention. For example, the feed may contain ethane or other hydrocarbons.

Figure 2 illustrates one embodiment of a cryogenic rectification plant comprising a single column for the production of product nitrogen which may be used in conjunction with this invention. Referring now to Figure 2, feed air 3 which corresponds to stream 31 of Figure 1 is passed into column 4 and is separated therein by cryogenic rectification into nitrogen-rich top vapor and oxygen-enriched bottom liquid. The oxygen-enriched bottom liquid is vaporised by indirect heat exchange against condensing nitrogen-rich top vapor to provide reflux to the column. In the embodiment illustrated in Figure 2, this is carried out in top condenser 7. Oxygen-enriched liquid is passed in stream 6 through valve 8 into top condenser 7. Nitrogen-rich top vapor is passed as stream 5 into top condenser 7 wherein it is condensed and returned to column 4 in stream 9 for reflux. Resulting oxygen-enriched vapor 10 is removed from the system as waste. A portion 11 of stream 5 is recovered as product nitrogen. The product nitrogen has a nitrogen concentration of at least 90 percent and may be up to 99.999999 percent or more and contains very low levels of carbon monoxide and hydrogen such that the product nitrogen may be used in an ultra high purity application without the need for passage through a point of use purifier. Generally, the product nitrogen will have a carbon monoxide concentration of 1 ppm or less and a hydrogen concentration of 1 ppm or less.

The following examples serve to further illustrate the invention and are not intended to be limiting.

### EXAMPLE 1

Ambient air was compressed to a pressure of 56 psia and it's temperature elevated by the heat of compression to 100°C. The air had a water vapor content of from 4000 to 6000 ppm and contained carbon monoxide at a concentration of 1.4 ppm and hydrogen at a concentration of 1.2 ppm. The compressed air was passed at a flowrate of 5 liters per minute through a catalytic reactor which measured 6 inches in length and 7/8 inch in diameter and contained 50 grams of catalyst material comprising palladium on alumina support. The feed was discharged from the catalytic reactor containing less than 0.10 ppm carbon monoxide and less than 0.30 ppm hydrogen on a continuous basis. The resulting carbon dioxide and water is removed from the feed by molecular sieve adsorbent.

### EXAMPLE 2

A procedure similar to that reported in Example 1 was carried out except that the flowrate was 2.6 liters per minute. The feed discharged from the catalytic reactor contained less than 0.10 ppm carbon monoxide and less than 0.15 ppm hydrogen on a continuous basis.

Now by the use of this invention, one can more easily remove oxidizable impurities from an oxygen-containing stream, which, if desired, may be employed as the feed to a cryogenic rectification plant which can then produce product which may be used in an ultra high purity application without the need for a point of use purifier. Another utility of the invention is to control the oxidizable species in the plant's product to consistent levels. In some applications, consistency of impurities is more important than low levels of impurities. The invention is capable of narrowing the variation of impurity levels in the plant product and thus improving the consistency of the product supplied by the plant.

Although the invention has been described in detail with reference to certain preferred embodiments, those skilled in the art will recognize that there are other embodiments of the invention within the spirit and the scope of the claims.

## Claims

1. A method for removing oxidizable species from a feed stream comprising:
(A) compressing a feed stream comprising oxygen and at least one oxidizable species from the group consisting of carbon monoxide, hydrogen and methane while elevating the temperature of the feed stream by heat of compression generated during the compression;
(B) passing the feed stream containing heat of compression through a catalytic zone containing oxidation catalyst;
(C) oxidizing oxidizable species in the feed stream to produce oxidized species within the catalytic zone; and
(D) removing oxidized species from the feed stream.

2. The method of claim 1 wherein the feed stream comprises feed air.

3. The method of claim 1 wherein the compressed feed stream has a temperature of at least 80°C.

4. The method of claim 1 wherein the oxidation catalyst comprises ruthenium, rhodium, palladium, osmium, copper, iridium, platinum or tin.

5. The method of claim 1 wherein the oxidation catalyst comprises two or more of ruthenium, rhodium, palladium, osmium, copper, iridium, platinum or tin.

6. The method of claim 1 further comprising passing the feed stream into a cryogenic rectification plant comprising at least one column and recovering product from the cryogenic rectification plant.

7. The method of claim 6 wherein the product is nitrogen.

8. The method of claim 6 wherein the product is oxygen.

9. The method of claim 6 wherein the product is argon.

10. The method of claim 1 wherein the oxidizable species is carbon monoxide and the oxidized species is carbon dioxide.

11. The method of claim 1 wherein the oxidizable species is hydrogen and the oxidized species is water.

12. The method of claim 1 wherein the oxidizable species is methane and the oxidized species is carbon dioxide and water.

13. The method of claim 1 wherein the oxidizable species is carbon monoxide and hydrogen and the oxidized species is carbon dioxide and water.

14. The method of claim 1 wherein the oxidizable species is carbon monoxide, hydrogen and methane and the oxidized species is carbon dioxide and water.

15. The method of claim 1 wherein the feed stream further comprises at least one oxidizable species other than carbon monoxide, hydrogen or methane.

16. Apparatus for removing oxidizable species from a feed stream comprising:
(A) a compressor and a catalyst bed;
(B) means for passing a feed stream to the compressor and means for passing the feed stream from the compressor to the catalyst bed without traversing a cooling means;
(C) a purifier for removing oxidized species from a stream;
(D) means for passing the feed stream through the purifier and means for withdrawing the feed stream from the purifier.

17. The apparatus of claim 16 further comprising a cryogenic rectification plant comprising at least one column, means for passing the feed stream from the purifier into the cryogenic rectification plant, and means for withdrawing product from the cryogenic rectification plant.
